(19) Europäisches Patentamt
European Patent Office
Office européen des brevets

(11) **EP 1 944 970 A2**

(12) **EUROPEAN PATENT APPLICATION**

(43) Date of publication:
**16.07.2008 Bulletin 2008/29**

(51) Int Cl.:
**H04N 7/10** (2006.01)

(21) Application number: **07114374.7**

(22) Date of filing: **15.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **09.01.2007 KR 20070002597**

(71) Applicant: **Samsung Electronics Co., Ltd.**
**Suwon-si,**
**Gyeonggi-do 442-742 (KR)**

(72) Inventor: **Kwrk, Byung-ju**
**102-1001 Samsung Raemian Apartment**
**Suwon-si (KR)**

(74) Representative: **Waddington, Richard**
**Appleyard Lees**
**15 Clare Road**
**Halifax, Yorkshire HX1 2HY (GB)**

(54) **Signal Splitting Apparatus, Video Apparatus using the Same, and Signal Splitting Method**

(57) A signal splitting apparatus which improves the noise figure (NF) characteristic when an input signal is split and transmitting the input signal to another device even when the set does not operate, a video apparatus including the signal splitting apparatus, and a signal splitting method thereof. The signal splitting apparatus which splits and outputs an input signal fed to an input port (PI) to a plurality of output ports (PO1,PO2), includes a signal amplifying part (140) which amplifies the input signal; a signal splitting part (160) which splits the amplified input signal; and a switching part (120) which selects either a first mode which provides the input signal to the signal amplifying part (140) to split the input signal, or a second mode which provides the input signal to a specific one of the output ports (PO1,PO2).

## FIG. 4

## Description

## BACKGROUND OF THE INVENTION

1. Field of the Invention

The present invention relates to signal splitting, and more particularly, to a signal splitting apparatus capable of splitting an input signal to a plurality of signals while avoiding degradation of noise figure (NF) characteristic, and providing the input signal to other devices even when the apparatus is not in operation, and a video apparatus and a signal splitting method using the same.

2. Description of the Related Art

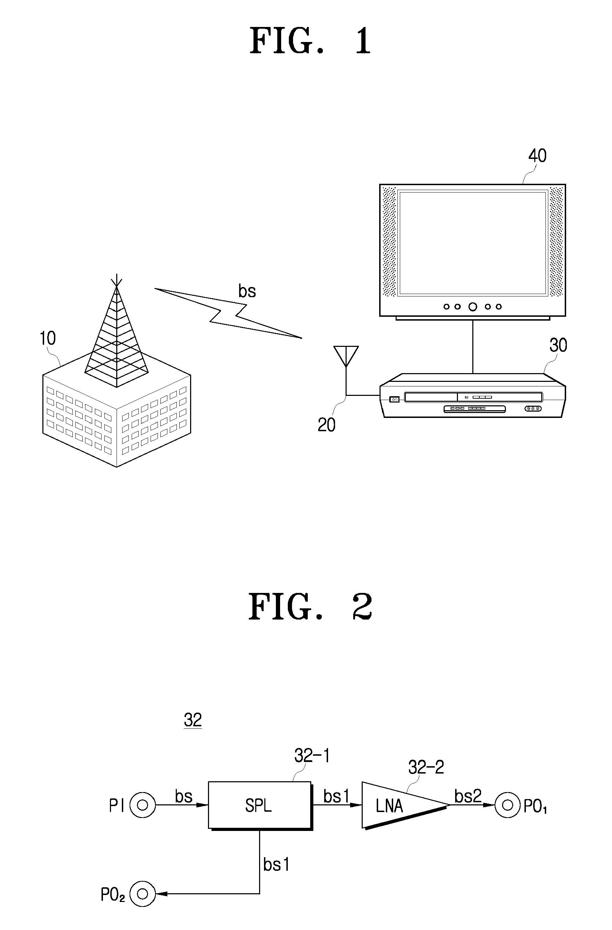

FIG. 1 is a view to explain a general broadcast signal transmission.

Conventionally, a video apparatus 30 such as a VTR and a DVD player receives an incoming signal on an antenna 20, for examples a broadcast signal (BS) from a broadcast station 10, and processes the broadcast signal for recording. The video apparatus 30 requires a signal splitting apparatus for transferring the received broadcast signal (BS) to a display device 40, such as television and monitor, connected to the video apparatus 30.

Examples of the signal splitting apparatus include a T-splitting apparatus, which does not account for the impedance matching between the received broadcast signal and the split broadcast signals, and a Wilkinson divider, which does account for the impedance matching.

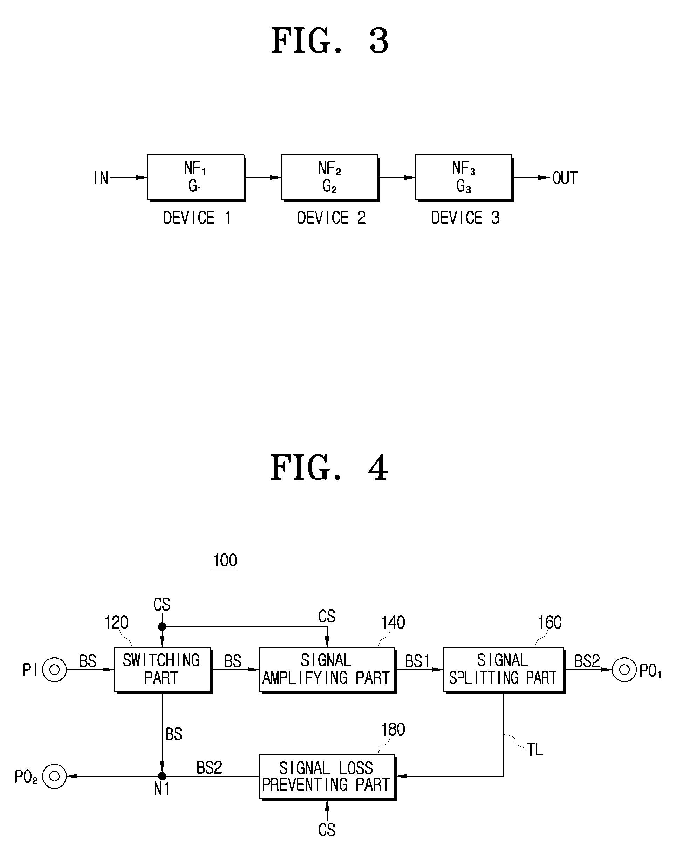

FIG. 2 is a simplified block diagram of a general signal splitting apparatus, and FIG. 3 shows noise figure (NF) when the signal is split at the signal splitting apparatus.

Referring to FIGS. 1 and 2, the general signal splitting apparatus 32 is disposed between an input port PI connected to an antenna and a plurality of output ports, for example, a first output port $PO_1$ for outputting a broadcast signal to a record unit (not shown) of the video apparatus and a second output port $PO_2$ for outputting the broadcast signal to the display device 40.

The signal splitting apparatus 32 can comprise a signal splitting part 32-1 which comprises a splitter SPL for splitting the broadcast signal BS fed from the input port PI and outputting the split broadcast signal BS1, and a signal amplifying part 32-2 which comprises a low noise amplifier (LNA) for amplifying the broadcast signal BS1 fed from the signal splitting part 32-1 and providing the amplified signal to the second output port $PO_2$.

With the signal splitting apparatus 32 constructed as above, when load devices 1, 2, and 3 have NF1, NF2, and NF3 and gains G1, G2, and G3 respectively as shown in FIG. 3, the broadcast signal fed from the antenna determines the total NF based on Equation 1.

[Equation 1]

$$NF = NF_1 + \frac{NF_2 - 1}{G_1} + \frac{NF_3 - 1}{G_1 G_2}$$

In Equation 1, if the signal splitting apparatus 32 is constructed to have a great gain value, the NFs of the following load devices 2 and 3, which are divided by the gains, can be ignored.

Accordingly, the total NF can be determined by the first load device 1. When the signal splitting part 32-1 is disposed to the antenna port ANT receiving the broadcast signal BS to split the broadcast signal BS, the signal splitting at the signal splitting part 32-1, which is the first load device 1, causes amplification of the broadcast signal BS after the signal loss above 3dB, by way of example, to thus increase the total NF. This results in the degradation of the NF characteristic.

To avoid the NF degradation, the signal amplifying part 32-2, for compensating for the loss of the broadcast signal BS, is disposed at the front of the signal splitting part 32-1. Therefore, by amplifying the broadcast signal BS and then splitting the broadcast signal BS, the total NF can be lowered.

However, with the signal amplifying part 32-2 is disposed at the front of the signal spitting part 32-1, when the video apparatus 30 is powered off or enters a standby mode, the power is not supplied to the signal amplifying part 32-2. As a result, the transmission path of the broadcast signal to the display device 40 is blocked and thus the video is not displayed in the display device 40.

## SUMMARY OF THE INVENTION

The present invention addresses the above-mentioned and/or other problems and disadvantages.

The present invention provides a signal splitting apparatus for avoiding degradation of NF characteristic when an input signal is divided and providing the input signal to a connected display device even when power is not supplied to the set.

The present invention also provides a video apparatus including the signal splitting apparatus.

The present invention also provides a signal splitting method for avoiding degradation of NF characteristic when an input signal is divided and providing the input signal to a connected display device even when power is not supplied.

According to the present invention there is provided an apparatus and method as set forth in the appended claims. Other features of the invention will be apparent from the dependent claims, and the description which follows.

According to an aspect of the present invention, a signal splitting apparatus for splitting and outputting an input signal fed to an input port to a plurality of output ports comprises a signal amplifying part for amplifying the input signal; a signal splitting part for splitting the amplified input signal; and a switching part for selecting either a first mode which provides the input signal to the signal amplifying part to split the input signal, or a second mode which provides the input signal to a specific one of the output ports.

The switching part may comprise a stationary point for receiving the input signal; a first free point (FP1) for connecting the signal amplifying part to the stationary point in the first mode; and a second free point for connecting the specific output port to the stationary point in the second mode.

The signal splitting apparatus may further comprise a transmission line for linking the specific output port to the signal splitting part. The second free point of the switching part may be connected to the transmission line.

The signal splitting apparatus may further comprise a signal loss preventing part disposed between a common node, which is formed when the switching part is linked to the transmission line, and the signal splitting part, for blocking the input signal passing through the switching part in the second mode from flowing to the signal splitting part.

The signal loss preventing part may comprise a plurality of diode elements arranged in an opposite direction to the common node and the signal splitting part respectively; and a switching element for changing a node potential between the diode elements using a control signal applied from outside and a power supply voltage.

The control signal may control the driving of the switching part. The switching element, in response to the control signal, may form the node potential between the diode elements as a potential of turn-on voltage of the diode elements in the first mode, and as a potential of turn-off voltage of the diode elements in the second mode.

According to another aspect of the present invention, a video apparatus comprises a signal processing unit for processing a broadcast signal received on an antenna; and a signal splitting unit for splitting the broadcast signal to provide the broadcast signal to the signal processing unit and an external display device. The signal splitting unit may operate in a first mode which splits and outputs the broadcast signal to the signal processing unit and the display device, and in a second mode which outputs the broadcast signal only to the display device.

The first mode may be a signal processing mode where the signal processing unit operates, and the second mode may be a power-off mode or a standby mode where the signal processing unit does not operate.

The signal splitting unit may comprise a signal amplifying part for amplifying the broadcast signal; a signal splitting part for splitting the amplified broadcast signal; and a switching part for selecting either the first mode to provide the broadcast signal to the signal amplifying part and split the broadcast signal, or the second mode to provide the broadcast signal only to the display device.

The switching part may comprise a stationary point for receiving the broadcast signal; a first free point (FP1) for connecting the signal amplifying part to the stationary point in the first mode; and a second free point for connecting the display device to the stationary point in the second mode.

The video apparatus may further comprise a transmission line for linking the display device to the signal splitting part. The second free point of the switching part may be connected to the transmission line.

The video apparatus may further comprise a signal loss preventing part disposed between a common node, which is formed when the switching part is linked to the transmission line, and the signal splitting part, for blocking the broadcast signal passing through the switching part in the second mode from flowing to the signal splitting part.

The signal preventing part may comprise a plurality of diode elements arranged in an opposite direction to the common node and the signal splitting part respectively; and a switching element for changing a node potential between the diode elements using a control signal applied from outside and a power supply voltage.

The control signal may control the driving of the switching part, and the switching element, in response for the control signal, may form the node potential between the diode elements as a potential of turn-on voltage of the diode elements in the first mode, and as a potential of turn-off voltage of the diode elements in the second mode.

The signal processing unit may be a recorder unit which processes the broadcast signal and stores the processed broadcast signal to a storage medium.

According to another aspect of the present invention, a signal splitting method for splitting and outputting an input signal fed to an input port to a plurality of output ports, comprises selecting either a first mode to split the input signal, or a second mode to provide the input signal to a specific one of the output ports; amplifying the input signal when the first mode is selected; and splitting the amplified input signal and transmitting the split signals to the respective output ports.

The signal splitting method may further comprise providing the input signal received through the input port to the specific output port when the second mode is selected.

The signal splitting apparatus, the video apparatus having the signal splitting apparatus, and the signal splitting method thereof can prevent the degradation of the NF characteristic caused by the signal splitting component, by amplifying and then splitting the input signal, and transmit the signal to the other device through the bypass path even when the signal amplifying component is disposed at the front of the signal splitting component.

## BRIEF DESCRIPTION OF THE DRAWING FIGURES

For a better understanding of the invention, and to show how embodiments of the same may be carried into effect, reference will now be made, by way of example, to the accompanying diagrammatic drawings in which:

FIG. 1 is a view illustrating a general broadcast signal transmission;

FIG. 2 is a simplified block diagram of a general signal splitting apparatus;

FIG. 3 is a view to explain noise figure (NF) when the signal splitting apparatus of FIG. 2 splits a signal;

FIG. 4 is a simplified block diagram of a signal splitting apparatus according to an exemplary embodiment of the present invention;

FIG. 5 is a detailed circuit diagram of the signal splitting apparatus of FIG. 4;

FIG. 6 is a simplified block diagram of a video apparatus according to an exemplary embodiment of the present invention; and

FIG. 7 is a flowchart of a signal splitting method according to an exemplary embodiment of the present invention.

## DETAILED DESCRIPTION OF THE EXEMPLARY EMBODIMENTS

Certain exemplary embodiments of the present invention will be described in greater detail with reference to the accompanying drawings.

FIG. 4 is a simplified block diagram of a signal splitting apparatus according to an exemplary embodiment of the present invention.

The signal splitting apparatus 100 of FIG. 4 comprises a switching part 120, a signal amplifying part 140, a signal splitting part 160, and a signal loss preventing part 180.

The switching part 120, which is connected to an input port PI, receives a primitive broadest signal BS applied through the input port PI. The input port PI may be an antenna port for wirelessly receiving a RF broadcast signal, or a cable connector coupled to an RF transmission cable delivering the RF broadcast signal BS. It is to be understood that the input signal can be received through other various input ports PI.

The switching part 120 switches between a first mode which splits and provides the received primitive broadcast signal BS to a plurality of output ports, and a second mode which outputs the primitive broadcast signal BS only to a specific one of the plurality of the output ports.

For example, when the signal splitting apparatus 100 is contained in a video device such as VTR, recording the broadcast signal, the switching part 120 selects either the first mode for outputting the broadcast signal to both of the first output port $PO_1$ which is con-

nected to a recorder unit for recording the broadcast signal and the second output port $PO_2$ which is connected to a display device, such as TV or monitor, for outputting the broadcast signal as video and audio perceivable to the user, or the second mode for outputting the broadcast signal only to the second output port $PO_2$ when the recorder unit enters a power-off mode or a standby mode.

For doing so, the switching part 120 selects either a first transmission path for transmitting the primitive broadcast signal BS to the signal amplifying part 140, or a second transmission path for transmitting the primitive broadcast signal BS to the second output port $P0_2$ connected to the display device in response to a control signal CS applied from outside.

The signal amplifying part 140 is connected to the back end of the switching part 140. Upon activating in response to a control signal CS, the signal amplifying part 140 serves to generate and output a first broadcast signal BS1 of which the signal loss due to the following device is compensated by amplifying the primitive broadcast signal BS, when the switching part 140 selects the first mode.

When the switching part 140 operates in the first mode and the signal amplifying part 140 outputs the first broadcast signal BS1, the signal splitting part 160 generates and outputs a plurality of second broadcast signals BS2 to be fed to the respective output ports by splitting the first broadcast signal BS1.

For instance, as shown in FIG. 4, when the signal splitting apparatus 100 has the first output port $PO_1$ and the second output port $PO_2$, the signal splitting part 160 provides the second broadcast signals BS2 which are split from the first broadcast signal BS1 to the first output port $PO_1$ and the second output port $PO_2$ respectively.

At this time, while the broadcast signal is subject to the loss, for example, the loss of 3 dB because of the signal splitting part 160, loss of the input primitive broadcast signal BS is almost negligible, because the signal amplifying part 140 receives and distributes the first broadcast signal BS1 which was compensated in advance in view of this loss. Therefore, the degradation of the NF characteristic can be avoided.

When the switching part 120 selects the second mode, the primitive broadcast signal BS is applied to a first node N1. The first node N1, which is connected to the second output port $PO_2$, can input the primitive broadcast signal BS directly to the display device such as a TV or a monitor. Herein, the first node N1 can be formed in a transmission line TL which links between the signal splitting part 160 and the second output port $PO_2$.

The switching part 120 is connected to the second output port $PO_2$ via the first node N1 in the transmission line TL between the signal splitting part 160 and the second output port $PO_2$, but not limited to this connection. Note that the switching part 120 can be connected to the second output port $PO_2$ independently of the transmission line TL.

When the switching part 120 and the signal splitting part 160 are connected at the first node N1 and the switching part 120 selects the second mode, the signal loss preventing part 180 serves to prevent the loss of the primitive broadcast signal BS which flows to the signal splitting part 160 through the first node N1 and is fed to the second output port $PO_2$.

Now, the signal splitting apparatus 100 is described in more detail.

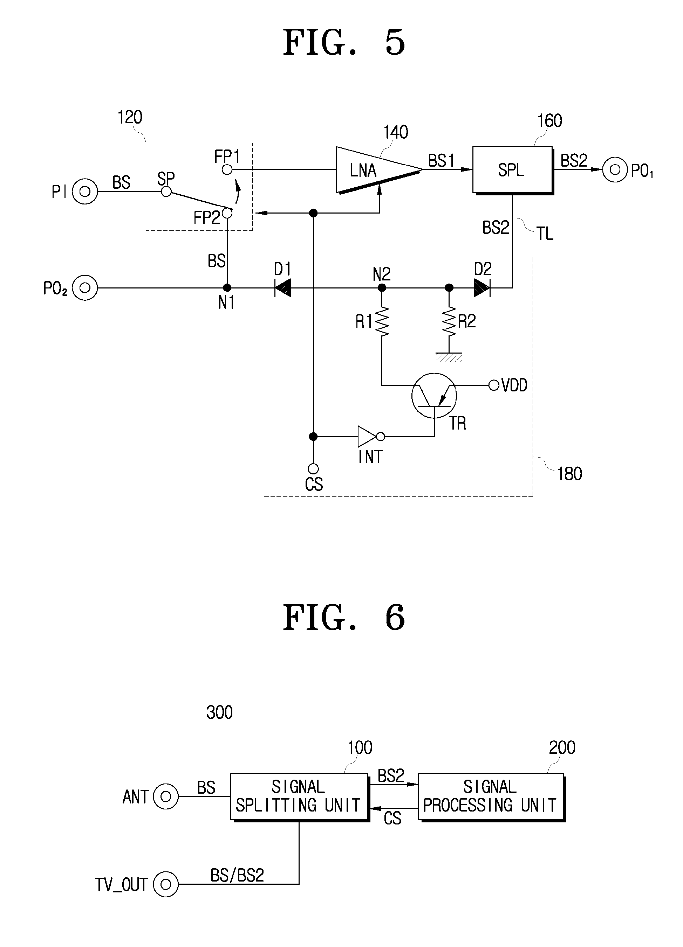

FIG. 5 is a detailed circuit diagram of the signal splitting apparatus of FIG. 4.

The signal splitting apparatus 100 of FIG. 5 comprises the switching part 120, the signal amplifying part 140, the signal splitting part 160, and the signal loss preventing part 180.

The switching part 120 can comprise an electromagnetic switch such as micro electro mechanical systems (MEMS) switch, or a mechanical switch such as relay switch. The switching part 120 switches according to the control signal CS output from outside and selects either the first mode or the second mode.

Any type of switch may be implemented as the switching part 120, if it switches in response to the control signal CS, and has a signal loss which is small enough to be ignored compared to the signal loss of the devices connected to the back end.

The switching part 120 comprises a stationary point SP connected to the input port PI, a first free point FP1 connected to the signal amplifying part 140, and a second free point FP2 connected to the second output port $PO_2$.

According to the control signal CS, the switching part 120 selectively connects the stationary point SP to the first and second free points FP1 and FP2. For instance, in the first mode, the control signal CS can be applied as a logical value high (H) and accordingly, the switching part 120 can electrically connect the stationary point SP to the first free point FP1. In the second mode, the control signal CS can be applied as a logical value low (L) and accordingly, the switching part 120 can electrically connect the stationary point SP to the second free point FP2.

Besides, the switching part 120 may enter the second mode by connecting the stationary point SP to the second free point FP2 any time before the control signal CS is applied. Afterwards, when the control signal CS of a certain voltage level is applied, the switching part 120 may enter the first mode by connecting the stationary point SP to the first free point FP1.

The signal amplifying part 140 activates in the second mode in response to the control signal CS. Upon receiving the primitive broadcast signal BS through the first free point FP1, the signal amplifying part 140 amplifies and outputs the primitive broadcast signal BS. As expressed in Equation 1, to compensate for the signal loss at the following device including an active element, for example, at the signal splitting part 160, the primitive broadcast signal BS is amplified and input as the first broadcast signal BS1.

For doing so, the signal amplifying part 140 can generally employ a low noise amplifier (LNA) to prevent the degradation of the NF characteristic.

For example, the signal splitting part 160 can employ a power divider such as Wilkinson divider to split the first broadcast signal BS1 fed from the signal amplifying part 140 and provide the split signals to the first output port $PO_1$ and the second output port $PO_2$.

When the switching part 120 and the signal splitting part 160 are connected at the first node N1 in the transmission line TL and the switching part 120 selects the second mode, the signal loss preventing part 180 serves to prevent the loss of the primitive broadcast signal BS which is fed to the second output port $PO_2$ because the primitive broadcast signal BS applied to the first node N1 flows to the signal splitting part 160.

As explained earlier in FIG. 4, the signal loss preventing part 180 can be selectively omitted when the switching part 120 is connected to the second output port $PO_2$ independently of the transmission line TL.

The signal loss preventing part 180 can be activated in the first mode to transfer the second broadcast signal BS2, which is output from the signal splitting part 160 along the transmission line, to the second output port PS2. In the second mode, the signal loss preventing part 180 can be inactivated to prevent the signal loss that generates as the primitive broadcast signal BS from the switching part 120 flows to the signal splitting part 160.

For instance, the signal loss preventing part 180 can comprise a first diode D1 disposed in the opposite direction to the first node N1, a second diode D2 disposed in the opposite direction to the signal splitting part 160, and a switching element TR connected to a second node N2 between the first diode D1 and the second diode D2. The switching element TR is selectively activated by the control signal CS to selectively provide a power supply voltage VDD to the second node N2. The signal loss preventing part 180 can comprise an inverter INT for converting the control signal CS and using the converted control signal CS as a control signal of the switching element TR.

The switching element TR is constructed using a PNP-type transistor. The converted control signal CS output from the inverter INT can be input to the base terminal of the switching element TR, the power supply voltage VDD can be fed to the emitter terminal, and the collector terminal can be connected to the second node N2 between the first and second diodes D1 and D2.

When the control signal CS is applied as the logical value H in the first mode, the switching element TR can be activated to form the second node N2 as the potential level of the power supply voltage VDD. Hence, the first and second diodes D1 and D2 connected to the second node N2 in the forward direction are turned on, and the broadcast signal is fed to the second output port $PO_2$ along the transmission line TL.

Conversely, when the control signal CS is input as the logical value L in the second mode, the switching element TR is inactivated and accordingly, the potential of the second node N2 is formed as a low potential level. As a result, the first and second diodes D1 and D2 connected to the second node N2 in the forward direction are turned off. The primitive broadcast signal passing through the switching part 120 is applied to the first node N1 in the second mode, and at this time, because the second node N2 is electrically open according to the turn-off of the first diode D1, the primitive broadcast signal BS applied to the first node N1 is provided to the second output port $PO_2$ without the signal loss.

The primitive broadcast signal BS is input as the first broadcast signal BS1, which is amplified for the signal loss, to the signal splitting part 160 in the first mode, and then split without the signal loss and provided to the first and second output ports $PO_1$ and $PO_2$. When there is no need to transfer the signal to the first output port $PO_1$ in the second mode, the primitive broadcast signal BS is sent to the second output port $PO_2$.

FIG. 6 is a simplified block diagram of a video apparatus according to an exemplary embodiment of the present invention.

The video apparatus of FIG. 6 comprises a signal splitting unit 100 and a signal processing unit 200.

The signal splitting unit 100 can be constructed the same as the signal splitting apparatus 100 of FIGS. 4 and 5. Accordingly, the signal splitting unit 100 has the same reference numeral and its detailed description shall be omitted.

When the video apparatus 300 is a device having a recording function, such as VTR and DVD, which is capable of receiving and recording the primitive broadcast signal BS, the signal processing unit 200 can comprise a recorder unit. Besides, the signal processing unit 200 can be constituted to perform various signal processes.

For instance, when the signal processing unit 200 is the recorder unit, it can comprise a controller for receiving the second broadcast signal BS2 split and transmitted from the signal splitting unit 100 and signal-processing video and audio signals to suit to the storage format, and a storage medium, such as HDD, flash memory, CD, and DVD, for storing the processed video and audio signals under the control of the controller.

In this case, the controller can issue the control signal CS which selects one of the modes, that is, one of the first mode and the second mode of the signal splitting unit 100. For example, the controller may issue the control signal CS in the second mode including a power-off mode or a standby mode of the video apparatus 300 where the operation of the signal processing unit 200 is not required. Instead, the controller may issue the control signal CS when the power is applied or it is activated in the recording mode.

In response to the control signal CS from the signal processing unit 200, by entering either the first mode or the second mode, the signal splitting unit 100 can provide the primitive broadcast signal BS to the second output port $PO_2$ so that the primitive broadcast signal BS is transferred to the display device connected to the second output port $PO_2$, or can split the primitive broadcast signal BS and apply the second broadcast signal BS2 to the signal processing unit 200 and the display device respectively.

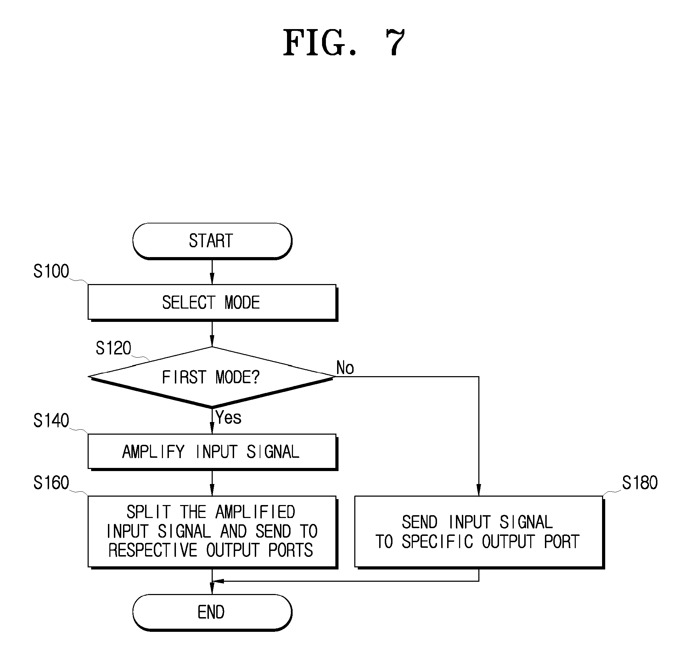

FIG. 7 is a flowchart of a signal splitting method according to an exemplary embodiment of the present invention.

Referring to FIGS. 4 through 7, the signal splitting method comprises operations of selecting the mode (S100), determining the mode (S120), amplifying the input signal (S140), splitting the amplified output signal and transferring the split signals to the respective output ports (S160), and transmitting the input signal to a specific output port (S180).

More specifically, in operation S100, the signal processing unit 200 enters one of the signal processing modes such as power-off mode, standby mode, and recording mode, according to the user's setup or its operational status, and issues the corresponding control signal CS.

In operation S120, the switching part 120 switches to enter either the first mode or the second mode in response to the control signal. In the first mode, the stationary point SP is connected to the first free point FP1. In the second mode, the stationary point SP is connected to the second free point FP2.

When the switching part 120 enters the first mode in operation S120, operation S140 is performed. When the switching part 120 enters the second mode, operation S180 is performed. While the mode is determined using the decision box in FIG. 7 to ease the understanding, when the mode is set according to the switching operation of the switching part 120, the signal splitting apparatus 100 operates in the different modes according to the set status.

When the switching part 120 enters the first mode, the primitive broadcast signal BS is fed to the signal amplifying part 140 through the first free point FP1 in operation S140. The primitive broadcast signal BS is amplified at the LNA and output as the first broadcast signal BS1.

In operation S160, the signal splitting part 160 receives the first broadcast signal BS1, splits the first broadcast signal BS1, and transfers the split signals to the first and second output ports $PO_1$ and $PO_2$. At this time, the signal loss preventing part 180 can be activated to provide the second broadcast signal BS2 to the second output port $PO_2$.

When the switching part 120 enters the second mode, the primitive broadcast signal BS is transferred to the second output port $PO_2$ via the first node N1 through the second free point FP2 in operation 180. At this time, the signal loss preventing part 180 can be inactivated so that the primitive broadcast signal BS is fed to the second output port $PO_2$ without the signal loss.

As set forth above, the signal splitting apparatus, the video apparatus having the signal splitting apparatus, and the signal splitting method thereof can prevent the degradation of the NF characteristic caused by the signal splitting component, by amplifying and then splitting the input signal.

While the signal amplifying component is disposed at the front of the signal splitting component, the input signal may be transmitted to the other connected device through the bypass path even when the power is not applied to the signal amplifying component. Hence, the other device may operate regardless of the operations of the signal amplifying component and the signal splitting component.

Although a few exemplary embodiments of the present invention have been shown and described, it will be appreciated by those skilled in the art that changes may be made in these exemplary embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A signal splitting apparatus which is operable to split and output an input signal fed to an input port (PI) to a plurality of output ports (PO1,PO2), comprising:

   a signal amplifying part (140) which is operable to amplify the input signal;
   a signal splitting part (160) which is operable to split the amplified input signal; and
   a switching part (120) which is operable to select either a first mode which provides the input signal to the signal amplifying part (140) to split the input signal, or a second mode which provides the input signal to a specific output port (PO1/PO2) of the plurality of output ports (PO1, PO2).

2. The signal splitting apparatus of claim 1, wherein the switching part (120) comprises:

   a stationary point (SP) which is operable to receive the input signal;
   a first free point (FP1) which is operable to connect the signal amplifying part (140) to the stationary point (SP) in the first mode; and
   a second free point (FP2) which is operable to connect the specific output port (PO1/PO2) to the stationary point (SP) in the second mode.

3. The signal splitting apparatus of claim 2, further comprising:

   a transmission line (TL) which is operable to link the specific output port (PO1/PO2) to the signal splitting part (160),

   where the second free point (FP2) of the switching part (120) is connected to the transmission line (TL).

4. The signal splitting apparatus of claim 3, further comprising:

   a signal loss preventing part (180) disposed between a common node and the signal splitting part (160), which is operable to block the input signal passing through the switching part (120) in the second mode from flowing to the signal splitting part (160),

   wherein the common node is formed when the switching part (120) is linked to the transmission line (TL).

5. The signal splitting apparatus of claim 4, wherein the signal loss preventing part (180) comprises:

   a plurality of diode elements (D1,D2) arranged in an opposite direction to the common node and the signal splitting part (160) respectively; and
   a switching element (TR) which is operable to change a node potential between the diode elements (D1,D2) using a control signal applied from outside and a power supply voltage.

6. The signal splitting apparatus of claim 5, wherein the control signal controls a driving of the switching part (120), and
the switching element (TR), in response to the control signal, is operable to form the node potential between the plurality of diode elements (D1,D2) to a potential of turn-on voltage of the plurality of diode elements (D1,D2) in the first mode, and as a potential of turn-off voltage of the plurality of diode elements (D1,D2) in the second mode.

7. A video apparatus comprising:

> a signal processing unit (200) which is operable to process a broadcast signal received on an antenna; and
> a signal splitting unit (100) which is operable to split the broadcast signal to provide the broadcast signal to the signal processing unit (200) and an external display device,
> wherein the signal splitting unit (100) is adapted to operate in a first mode which splits and outputs the broadcast signal to the signal processing unit (200) and the display device, and in a second mode which outputs the broadcast signal only to the display device.

8. The video apparatus of claim 7, wherein the first mode is a signal processing mode where the signal processing unit (200) operates, and the second mode is a power-off mode or a standby mode where the signal processing unit (200) does not operate.

9. The video apparatus of claim 7 or claim 8, wherein the signal splitting unit (100) comprises:

> a signal amplifying part (140) which is operable to amplify the broadcast signal;
> a signal splitting part (160) which is operable to split the amplified broadcast signal; and
> a switching part (120) which is operable to select either the first mode to provide the broadcast signal to the signal amplifying part (140) and split the broadcast signal, or the second mode to provide the broadcast signal only to the display device.

10. The video apparatus of claim 9, wherein the switching part (120) comprises:

> a stationary point (SP) which is operable to receive the broadcast signal;
> a first free point (FP1) which is operable to connect the signal amplifying part (140) to the stationary point (SP) in the first mode; and
> a second free point (FP2) which is operable to connect the display device to the stationary point (SP) in the second mode.

11. The video apparatus of claim 10, further comprising:

a transmission line (TL) which is operable to link the display device to the signal splitting part (160), where the second free point (FP2) of the switching part (120) is connected to the transmission line (TL).

12. The video apparatus of claim 11, further comprising: a signal loss preventing part (180) disposed between a common node, which is formed when the switching part (120) is linked to the transmission line (TL), and the signal splitting part (160), for blocking the broadcast signal passing through the switching part (120) in the second mode from flowing to the signal splitting part (160).

13. The video apparatus of claim 12, wherein the signal preventing part comprises:

> a plurality of diode elements (D1,D2) arranged in an opposite direction to the common node and the signal splitting part (160) respectively; and
> a switching element (TR) which is operable to change a node potential between the diode elements (D1,D2) using a control signal applied from outside and a power supply voltage.

14. The video apparatus of claim 13, wherein the control signal is operable to control a driving of the switching part (120), and
the switching element (TR), in response to the control signal, is operable to form the node potential between the diode elements (D1,D2) to a potential of turn-on voltage of the plurality of diode elements (D1,D2) in the first mode, and as a potential of turn-off voltage of the plurality of diode elements (D1,D2) in the second mode.

15. The video apparatus of any one of claims 7 to 14, wherein the signal processing unit (200) is a recorder unit which is operable to process the broadcast signal and to store the processed broadcast signal in a storage medium.

16. A signal splitting method for splitting and outputting an input signal fed to an input port (PI) to a plurality of output ports (PO1,PO2), the method comprising:

> selecting one of a first mode to split the input signal and a second mode to provide the input signal to one of the plurality of output ports (PO1,PO2);
> amplifying the input signal when the first mode is selected; and
> splitting the amplified input signal into a plurality of split signals and transmitting the plurality of split signals to the plurality of output ports (PO1,PO2).

17. The signal splitting method of claim 16, further comprising providing the input signal received through the input port (PI) to one of the plurality of output ports (PO1,PO2) when the second mode is selected.

# FIG. 1

# FIG. 2

# FIG. 3

IN → [ NF₁ / G₁ ] → [ NF₂ / G₂ ] → [ NF₃ / G₃ ] → OUT

DEVICE 1   DEVICE 2   DEVICE 3

# FIG. 4

100

CS

120   CS   140   160

PI ⊚ —BS→ SWITCHING PART —BS→ SIGNAL AMPLIFYING PART —BS1→ SIGNAL SPLITTING PART —BS2→ ⊚ PO₁

BS

TL

180

PO₂ ⊚ ← N1 ←BS2— SIGNAL LOSS PREVENTING PART ←

CS

# FIG. 5

# FIG. 6

# FIG. 7

```
                    ┌─────────────┐
                    │   START     │
                    └─────────────┘
                           │
                           ▼
S100 ──────    ┌─────────────────────┐
               │    SELECT MODE       │
               └─────────────────────┘
                           │
                           ▼
S120 ──────        ◇─────────────◇              No
                  ╱  FIRST MODE?   ╲ ──────────────────┐
                   ◇─────────────◇                     │
                           │ Yes                        │
                           ▼                            │
S140 ──────    ┌─────────────────────┐                 │
               │ AMPLIFY INPUT SIGNAL │                 │
               └─────────────────────┘                 │
                           │                            ▼
S160 ──────    ┌─────────────────────┐     S180  ┌──────────────────────┐
               │   SPLIT THE AMPLIFIED │          │   SEND INPUT SIGNAL   │
               │ INPUT SIGNAL AND SEND TO│         │ TO SPECIFIC OUTPUT PORT│
               │ RESPECTIVE OUTPUT PORTS │         └──────────────────────┘
               └─────────────────────┘                 │
                           │                            │
                           ▼◄───────────────────────────┘
                    ┌─────────────┐
                    │    END      │
                    └─────────────┘
```